## Europäisches Patentamt
## European Patent Office
## Office européen des brevets

(19)

(11) Veröffentlichungsnummer: **0 149 836**
**B1**

(12) # EUROPÄISCHE PATENTSCHRIFT

(45) Veröffentlichungstag der Patentschrift:
15.11.89

(21) Anmeldenummer: 84116110.2

(22) Anmeldetag: 21.12.84

(51) Int. Cl.⁴: **C 08 L 21/00** //
(C08L21/00, 33:06)

(54) **Kautschuk-Mischungen und daraus hergestellte Gummiartikel und Kraftfahrzugreifen.**

(30) Priorität: 07.01.84 DE 3400365
04.12.84 DE 3444087

(43) Veröffentlichungstag der Anmeldung:
31.07.85 Patentblatt 85/31

(45) Bekanntmachung des Hinweises auf die Patenterteilung:
15.11.89 Patentblatt 89/46

(84) Benannte Vertragsstaaten:
AT BE CH DE FR GB IT LI NL SE

(56) Entgegenhaltungen:
DE-A-2 018 337
US-A-2 604 453

CHEMICAL ABSTRACTS, Band 98, Nr. 14, April 1983,
Seite 65, Nr. 106689u, Columbus, Ohio, US; & SU - A
- 979 414
CHEMICAL ABSTRACTS, Band 97, Nr. 26, Dezember
1982, Seite 81, Nr. 217771q, Columbus, Ohio, US; &
SU - A - 939 477

(73) Patentinhaber: HOECHST AKTIENGESELLSCHAFT,
Postfach 80 03 20, D-6230 Frankfurt am Main 80
(DE)

(72) Erfinder: **Der Erfinder hat auf seine Nennung
verzichtet**

EP 0 149 836 B1

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

**Beschreibung**

Kautschuk-Mischungen werden gemäß dem Stand der Technik mit Hilfe von Mischaggregaten hergestellt, in welchen die zähen, festen, kautschukelastischen Polymeren intensiv unter Anwendung hoher Scherkräfte mit den übrigen Komponenten gemischt werden. Für die Wirtschaftlichkeit des Mischprozesses spielt die aufzuwendende Arbeit und die Dauer eine große Rolle, so daß eine Verringerung des Energie- und des Zeitaufwandes erwünscht ist und laufend angestrebt wird. Da viele aus den Kautschuk-Mischungen hergestellte Vulkanisate wie Schläuche, Fahrzeugreifen, Transportbänder und Keilriemen nicht aus einen Rohling allein hergestellt, sondern aus verschiedenen Teilen mit unterschiedlicher Formulierung zusammengesetzt werden, fordert man von den Mischungen dieser Einzelteile eine gewisse Klebrigkeit, damit man sie zu einem temporär stabilen Rohling zusammenfügen kann. Bei den Endprodukten ist außerdem auch eine Verbesserung der mechanischen Eigenschaften wie Reißfestigkeit, Reißdehnung, Spannungswerte u.ä. erstrebenswert. So sind mit Schwefel vulkanisierbare elastomere Olefin-Acrylsäureester-Copolymerisate als modifizierende Mischkomponenten für Kautschukmischungen bereits aus der DE-A-2 018 337 bekannt.

Gegenstand der Erfindung sind nunmehr Kautschuk-Mischungen mit guter Verarbeitbarkeit und guten mechanischen Eigenschaften auf Basis von synthetischen und/oder natürlichen Kautschuk-Arten unter Mitverwendung von üblichen Zusätzen, dadurch gekennzeichnet, daß die Mischung ein Copolymerisat mit einer Schmelzviskosität von höchstens 150 Pa·s, gemessen bei 180°C, aus

a)  40 bis 95 Gew.-% mindestens eines Alkylesters von α,β-äthylenisch ungesättigten Mono- und/oder Dicarbonsäuren, der im Alkoholrest 1 bis 12 C-Atome enthält,

b)  0,5 bis 15 Gew.-% mindestens eines Amids α,β-äthylenisch ungesättigter Mono- und/oder Dicarbonsäuren,

c)  0,2 bis 10 Gew.-% mindestens einer α,β-äthylenisch ungesättigten Mono- und/oder Dicarbonsäure und

d)  0 bis 50, vorzugsweise 0 bis 30 Gew.-% mindestens einer anderen α,β-äthylenisch ungesättigten copolymerisierbaren Verbindung,

enthält, wobei die Summe der Prozentangaben aus a) bis d) jeweils 100 beträgt, und die Kautschuk-Mischungen das Copolymerisat in einer Menge von 0,5 bis 150 Gew.-%, bezogen auf die Menge an eingesetztem Kautschuk, enthalten.

Gemäß der Erfindung kann durch die Mitverwendung von Copolymerisaten ungesättigter Säuren, verglichen mit der alleinigen Anwendung der sonstigen Komponenten von üblichen Kautschuk-Mischungen, ein deutlicher Fortschritt sowohl bei der Herstellung der Mischung als auch bei der Fertigung von Rohlingen und außerdem hinsichtlich der mechanischen Eigenschaften der Endprodukte erzielt werden. Je nach Art der Rezeptur der Kautschuk-Mischung können die genannten technischen Vorteile einzeln oder gemeinsam in besonderem Maße in Erscheinung treten.

Besonders überraschend ist die Tatsache, daß Vulkanisate der erfindungsgemäßen Kautschuk-Mischungen trotz des darin enthaltenen thermoplastischen Copolymerisats, das als solches mit Schwefel nicht vulkanisierbar ist, in der Wärme sowohl bei statischer Beanspruchung (gemessen durch den Druckverformungsrest) als auch bei dynamischer Krafteinwirkung (z. B. in der Goodrich-Flexometer-Prüfung) keine nennenswert stärkere Verformung erleiden als vergleichbare Vulkanisate ohne Copolymerisat-Zusatz. Überraschenderweise wird auch die Härte der Vulkanisate durch das Copolymerisat nicht herabgesetzt. Ebenfalls unerwartet ist der kaum merkbare Temperaturanstieg in den unter Verwendung der erfindungsgemäßen Kautschuk-Mischungen hergestellten Vulkanisaten bei dynamischer Beanspruchung im Goodrich-Flexometer, obwohl die bei der Messung der Rückprallelastizität festgestellten hohen Dämpfungseigenschaften auf eine starke Energie-Absorption schließen lassen. In Kautschuk-Mischungen auf Basis Butylkautschuk wird durch den erfindungsgemäßen Zusatz der Copolymerisate die Verarbeitbarkeit in den Mischaggregaten, z. B. auf Mischwalzen, sehr deutlich verbessert, was bei Zusatz anderer Polymerer z. B. Polychloropren nicht eintritt.

Die Schmelzviskosität des Copolymerisats beträgt vorzugsweise höchstens 100, insbesondere höchstens 70 Pa·s (180°C). Bevorzugt ist ferner mindestens eine Komponente b) oder c) zugegen, wobei die Gesamtmenge der Komponenten b) und c) bevorzugt zwischen 5 und 15 Gew.-% beträgt.

Gegenstand der Erfindung sind auch Gummiartikel und Kraftfahrzeugreifen, die durch Vulkanisation aus den vorgenannten Mischungen hergestellt worden sind.

Geeignete Alkylreste der Esterkomponente a) sind z. B. die Methyl-, Äthyl-, Propyl, Butyl-, Hexyl-, Octyl- wie 2-Äthylhexyl-, Decyl- und Dodecylgruppen sowie deren Isomere. Vorteilhaft wird als Komponente a) 2-Äthylhexylacrylat oder dessen Mischung mit Butylacrylat oder in einem Gemisch mit anderen Estern ein Anteil von über 50 Gew.-% 2-Äthylhexylacrylat oder dessen Mischung mit Butylacrylat verwendet. Dies ist besonders dann der Fall, wenn das Copolymerisat allein aus der Komponente a) gebildet wird. In dieser Mischung der beiden Ester beträgt der Anteil an Butylacrylat z. B. bis zu 70, vorzugsweise 10 - 50 Gew.-%, bezogen auf die Summe dieser Ester. Unter Butylacrylat werden dabei das n-, sek-, tert.- und iso-Butylacrylat verstanden, wobei n-Butylacrylat bevorzugt ist.

Als Amide b) eignen sich die Mono- und/oder Diamide der genannten Säuren sowie die Monoamide der zu a) genannten ungesättigten Dicarbonsäuremonoester mit 1 - 12 C-Atomen in der Alkylgruppe. Vorzugsweise sind die Amide am Stickstoff unsubstituiert.

Die Carbonsäureeinheiten der Komponenten a) bis c) leiten sich vorzugsweise von Säuren mit 3 - 5 C-Atomen ab. Geeignete Carbonsäuren sind z. B. Crotonsäure, Itakonsäure, Maleinsäure und/oder Fumarsäure, sowie vom Styrol abgeleitete, carboxylgruppenhaltige Monomere, vorzugsweise jedoch Acryl- und/oder Methacrylsäure.

Geeignete Verbindungen d) sind z. B. Styrol, $\alpha$-Methylstyrol, die verschiedenen Vinyltoluole, Äthylen, Propylen, Vinylacetat und/oder Vinylchlorid.

Nach einer bevorzugten Ausführungsform wird ein Copolymerisat verwendet, das aus a) 55 bis 65 % 2-Äthylhexylacrylat, 15 bis 30 % Butylacrylat und 3 bis 15 % Methylmethacrylat, b) 2 bis 10 % Acrylamid und c) 0,3 bis 5 % Acrylsäure aufgebaut ist, wobei die Summe von b) und c) vorzugsweise mindestens 5 % (jeweils Gew.-%) beträgt.

Die Copolymerisate werden in den Kautschuk-Mischungen im allgemeinen in einer Menge von 0,5 bis 150, vorzugsweise 1 bis 100 und insbesondere 1,5 bis 50 Gew.-%, bezogen auf die Menge an eingesetzten Kautschuken, verwendet.

Die Copolymerisate können in üblicher Weise, z. B. durch Lösungs- oder Substanzpolymerisation in Gegenwart von Polymerisationsinitiatoren und gegebenenfalls auch von Kettenreglern hergestellt sein. Als Initiatoren eignen sich die üblichen Peroxide, wie Di-tert.-butyl-, Dicumyl-, Di-benzoyl- und Methyläthylketonperoxid oder auch tert.-Butyl-perbenzoat, jeweils einzeln oder im Gemisch, oder Azoisobutyronitril. Zweckmäßig wird die Polymerisation in geeigneten Lösemitteln, z. B. aromatischen Kohlenwasserstoffen wie Toluol und Xylol und deren Mischungen mit gesättigten Kohlenwasserstoffen wie Cyclohexan oder Benzinfraktionen und/oder Mischungen mit Alkoholen, durchgeführt. Zur Gewinnung der festen Copolymerisate werden die Lösemittel in der Regel nach Beendigung der Polymerisation durch Destillation bei erhöhter Temperatur, d.h. bis zu etwa 200°C, gegebenenfalls unter vermindertem Druck, entfernt. Gegebenenfalls kann die nach der Polymerisation erhaltene Reaktionslösung auch erst nach der Zugabe zu anderen, ebenfalls in den Kautschuk-Mischungen verwendeten Chemikalien oder Hilfsstoffen (wie Weichmachern oder Harzen) vom Lösemittel befreit werden, so daß das Copolymerisat mit dem anderen Stoff in einem lösemittelfreien Gemisch vorliegt und in dieser Form zur Anwendung kommt.

Die Kautschuk-Mischungen können auf Basis der üblichen Kautschuktypen wie Natur-, Butadien-Styrol-, Butadien-Acrylnitril-, Polybutadien-, Polyisopren-, Butyl-, Chlor- oder Brom-Butyl-, Äthylen-Propylen-Dien-Terpolymer-Kautschuk (EPDM-Kautschuk) oder deren Gemischen hergestellt werden, wie sie gewöhnlich in der Gummi-Industrie Verwendung finden.

Übliche Zusatzstoffe sind z. B. Füllstoffe, Pigmente, Verarbeitungshilfsmittel, Weichmacher, Plastifizierungsmittel, Harze, Vulkanisationsmittel, Beschleuniger und Aktivatoren. Geeignete Füllstoffe sind die handelsüblichen Ruße und Kieselsäuren, ferner Kaoline, Kreide u.dgl.; geeignete Pigmente sind z. B. Eisenoxide und Phthalocyanine. Geeignete Verarbeitungshilfsstoffe sind z. B. Zinkoxyd, Stearinsäure, Alterungsschutzmittel usw. sowie gegebenenfalls auch Treibmittel und haftungsverbessernde Zusätze wie Metallsalze, z. B. Kobaltnaphthenat oder andere Salze von Metallkationen mit gesättigten oder olefinisch ungesättigten organischen Säuren, gegebenenfalls in Form von Säuregruppen enthaltenden Polymeren, wie Ionenaus-tauschern.

Als Weichmacher und Plastifizierungsmittel können z. B. Mineralöle und/oder hochsiedende Dicarbonsäureester und/oder Glykole verwendet werden. Als Harze kommen z. B. Phenolharze in Betracht, die in Form von Novolaken und getrennt oder gemeinsam zugegebenen üblichen Härtungsmitteln wie Hexamethylentetramin und/oder reaktiven Melaminharzen für die Verstärkung oder im Falle der nicht härtbaren Phenolharze für die Klebrigmachung dienen. Andere Harze, wie Kolophonium und dessen Derivate, Kohlenwasserstoffharze und Butylphenol-Acetylen-Additionsprodukte können als Klebrigmacher verwendet werden.

Die Vulkanisation kann sowohl mit Schwefel und geeigneten üblichen Zusatzstoffen als auch ohne Schwefel mit Vulkanisationsharzen oder in bestimmten Fällen z. B. bei EPDM-Kautschuk, mit Peroxiden erfolgen. Die Vulkanisation in Gegenwart von Schwefel ist aber bei Natur-, Butadien-Styrol-, Butadien-Acrylnitril-, Polybutadien- und Polyisopren-Kautschuk bevorzugt. Ihr Verlauf kann durch Auswahl geeigneter, in der Kautschuktechnologie üblicher Zusatzstoffe wie Beschleuniger, Aktivatoren und Regler den praktischen Erfordernissen angepaßt werden.

Da die erfindungsgemäßen Copolymerisate aufgrund des Vorhandenseins von reaktionsfähigen Gruppen (Carboxyl- und Carbonamidgruppen) Vernetzungsreaktionen eingehen können, ist mitunter die Zumischung geeigneter Vernetzungsmittel, wie Methylengruppen-Donatoren (Paraformaldehyd und/oder Hexamethylentetramin u.ä.) und/oder Amin- und/oder Methylol- und/oder Hydroxylgruppen enthaltende Verbindungen, z. B. teilweise veretherte Melaminharze, die also noch freie Methylolgruppen enthalten, empfehlenswert.

Die erfindungsgemäßen Kautschuk-Mischungen werden in üblicher Weise in Innenmischern oder auf Walzen gemischt. Hierbei empfiehlt es sich, zur Verkürzung der Einarbeitungszeit der weiteren Komponenten und zur rascher Bildung des Teils auf den Walzen die Copolymerisate bereits beim Beginn des Mischvorganges zuzugeben. Die Weiterverarbeitung der rohen Mischungen sowie die Vulkanisation kann nach den üblichen Verfahren erfolgen.

Die erfindungsgemäß erhaltenen Vulkanisate können z. B. als technische Gummiwaren wie Dämpfungselemente, Gummimanschetten, Beläge, Schläuche, Transportbänder, Keilriemen, aber auch für Kraftfahrzeugreifen verwendet werden. Die nachfolgend beschriebenen Versuche dienen zur Erläuterung der Zusammensetzung und der Eigenschaften der erfindungsgemäß erhaltenen Vulkanisate. T bedeutet Gewichtsteile.

**Beispiele**

I. <u>Herstellung der Copolymerisate</u>

A. Ein Gemisch aus 1 T Acrylsäure, 6 T Acrylamid, 9 T Methylmethacrylat, 61 T 2-Äthylhexylacrylat und 23 T n-Butylacrylat wurde in einer Mischung aus Toluol, Cyclohexan und Isobutanol 3 : 3 : 1) unter Einsatz von 0,5 T Di-tert.-butylperoxyd bei 100 bis 130°C copolymerisiert und das Lösemittelgemisch durch Destillation, zuletzt bei 180 bis 190°C unter vermindertem Druck (50 mbar) entfernt. Die Ausbeute betrug mehr als 99 %; Schmelzviskosität 45 Pa·s bei 180°C.

B. Die unter A beschriebene Polymerisation wurde unter Zusatz von 1 % n-Dodecylmercaptan als Molekulargewichtsregler wiederholt. Schmelzviskosität 25 Pa·s bei 180°C.

C. In der unter A beschriebenen Weise wurden 2,9 T Acrylsäure, 5,8 T Acrylamid, 8 T Methylmethacrylat, 62,3 T 2-Äthylhexylacrylat und 21 T n-Butylacrylat copolymerisiert. Nach Abtrennung des Lösemittels betrug die Ausbeute, bezogen auf eingesetzte Monomere, über 98 %. Das erhaltene zähelastisch Kunstharz hatte eine Schmelzviskosität von 34 Pa·s bei 180°C.

II. <u>Verwendung der Copolymerisate in Kautschuk-Mischungen</u>

Die gemäß A bis C erhaltenen Copolymerisate wurden in Kautschuk-Mischungen geprüft.

1) Als Basis diente ein unter der Handelsbezeichnung Esso-Butyl 268 kommerziell verfügbarer Butylkautschuk, der zum Vergleich allein und zum anderen mit dem Copolymerisat A auf eine Labormischwalze gegeben wird. Beobachtet wurde die Zeit, die bis zur Bildung eines gewalzten Felles verging. Die Verarbeitung des Kautschuks gestaltete sich um so einfacher und rascher, je schneller sich ein möglichst geschlossenes Fell bildete.

**Tabelle 1**

| Zusammensetzung (T) | Beispiel 1 | Vergleich 1 |
|---|---|---|
| Butylkautschuk | 285 | 300 |
| Copolymerisat A | 15 | - |
| Versuchsablauf (zeitliche Folge): | | |
| 0 min Beginn = Aufgabe des Butylkautschuks | + | + |
| 2 min Aufgabe des Copolymerisats | + | - |
| 5 min | Fell gebildet | kein Fell gebildet |
| 10 min | Fell läuft | " |
| 15 min | " | " |

Höhere Zusätze des Copolymerisats bewirkten keine wesentliche Verkürzung der Dauer für die Bildung des Fells, ergaben aber eine noch glattere und homogenere Struktur und bessere Handhabbarkeit auf der Walze.

2) Wiederholte man Beispiel 1 und den Vergleich 1 mit Naturkautschuk, so wurde ebenfalls nur in Gegenwart des Copolymerisats in kurzer Zeit ein geschlossenes Fell gebildet.

3) Wiederholte man Beispiel 1 mit und ohne Zugabe (Vergleich 2) des Copolymerisats, wobei nach ca. 10 Minuten mit der portionsweisen Einarbeitung von insgesamt 150 T Ruß begonnen wurde, benötigte man mit der erfindungsgemäßen Mischung für die Bildung eines Felles etwa die Hälfte der Arbeitszeit auf der Mischwalze gegenüber dem Vergleich 2.

4 bis 6) Zur Verdeutlichung der Wirkung des Zusatzes des Copolymerisats zu Styrol-Butadien-Kautschuk (SBR) auf die mechanischen Eigenschaften der Vulkanisate wurden Mischungen ohne Füllstoffe gemäß Beispielen 4 bis 6 und dem Vergleich 3 hergestellt und nach einer Vulkanisation von 30 Minuten bei 155°C geprüft.

**Tabelle 2**

| | Beispiel | | | Vergleich |
|---|---|---|---|---|
| Zusammensetzung (T) | 4 | 5 | 6 | 3 |
| SBR[1] | 95 | 90 | 70 | 100 |
| Copolymerisat A | 5 | 10 | 30 | - |
| Stearinsäure | 1,5 | 1,5 | 1,5 | 1,5 |
| Zinkoxid | 3 | 3 | 3 | 3 |
| Alterungsschutzmittel[2] | 2 | 2 | 2 | 2 |

| Schwefel | 1,14 | 1,08 | 0,84 | 1,20 |
| Benzothiazyl-2-cyclohexylsulfenamid | 0,95 | 0,90 | 0,70 | 1 |
| Dithiodimorpholin | 0,95 | 0,90 | 0,70 | 1 |

1) handelsüblich, mit 23,5 % gebundenem Styrol.
2) 1 T N-Isopropyl-N-phenyl-p-phenylendiamin und 1 T eines nicht verfärbenden Chinolinderivates.

**Tabelle 2** (Forts.)

| Prüfergebnisse | Beispiel | 4 | 5 | 6 | Vergl. 3 |
|---|---|---|---|---|---|
| Mooney-Plastizität 120°C (L 1 + 4) | (ME) | 22 | 19 | 7 | 24 |
| Reißfestigkeit | (MPa) | 2,1 | 2,4 | 1,9 | 1,6 |
| Reißdehnung | (%) | 266 | 318 | 358 | 179 |
| Spannungswert: 100 % Dehnung | (MPa) | 1,1 | 1,1 | 0,8 | 1,2 |
| "            200 % Dehnung | (MPa) | 1,6 | 1,5 | 1,1 | - |
| "            300 % Dehnung | (MPa) | - | 1,7 | 1,4 | - |
| Rückprallelastizität    23° | (%) | 50 | 42 | 26 | 59 |
| Härte Shore A          23° | (°) | 41 | 40 | 31 | 43 |
| Winkelkerbzähigkeit | (N/mm) | 5,27 | 5,80 | 7,11 | 4,87 |

7 und 8) Füllstoffhaltige Mischungen aus Naturkautschuk bzw. Styrol-Butadien-Kautschuk unter Zusatz des Copolymerisats A (Beispiele 7 und 8) und die Vergleiche 4 und 5 wurden wie bei den Beispielen 4 bis 6 beschrieben hergestellt geprüft.

**Tabelle 3**

| Zusammensetzung (T) | Bsp. 7 | Vergl. 4 | Bsp. 8 | Vergl. 5 |
|---|---|---|---|---|
| Naturkautschuk | 95 | 100 | - | - |
| SBR3) | - | - | 95 | 100 |
| Copolymerisat A | 5 | - | 5 | - |
| Ruß | 50 | 50 | 50 | 50 |
| Zinkoxid | 5 | 5 | 5 | 5 |
| Stearinsäure | 1,5 | 1,5 | 1,5 | 1,5 |
| Alterungsschutzmittel3) | 2 | 2 | 2 | 2 |
| Schwefel | 2,5 | 2,5 | 2,5 | 2,5 |
| Benzothiazyl-2-cyclo-hexylsulfenamid | 0,9 | 0,9 | 0,9 | 0,9 |
| Tetramethylthiurammonosulfid | 0,3 | 0,3 | 0,3 | 0,3 |

3) wie in Tab. 2 angegeben

**Tabelle 3** (Forts.)

| Prüfergebnisse | | Bsp. 7 | Vgl. 4 | Bsp. 8 | Vgl. 5 |
|---|---|---|---|---|---|
| Mooney-Plastizität 120°C (L 1 + 4) | (ME) | 45 | 42 | 43 | 46 |
| Vulkanisation | | (15 min/145°C) | | (30 min/155°C) | |
| Reißfestigkeit | (MPa) | 19,4 | 19,8 | 18,6 | 21,8 |
| Reißdehnung | (%) | 241 | 245 | 174 | 217 |
| Spannungswert | | | | | |
| 10 % Dehnung | (MPa) | 1,6 | 1,7 | 1,9 | 1,8 |
| 25 % Dehnung | (MPa) | 2,4 | 2,4 | 2,7 | 2,4 |
| 50 % Dehnung | (MPa) | 3,8 | 3,8 | 4,2 | 3,7 |
| 100 % Dehnung | (MPa) | 7,5 | 7,6 | 9,3 | 7,9 |
| 200 % Dehnung | (MPa) | 16,0 | 16,2 | - | 18,6 |
| 300 % Dehnung | (MPa) | - | - | - | - |
| Rückprallelastizität 23°/70°C | (%) | 37/51 | 43/56 | 32/45 | 35/45 |
| Härte Shore A 23°/70°C | (°) | 73/71 | 73/70 | 75/75 | 75/70 |
| Winkelkerbzähigkeit | (N/mm) | 37,0 | 42,0 | 15,4 | 17,5 |
| Druckverformungsrest | (%) | 43,1 | 40,1 | 35,1 | 31,3 |
| Goodrich-Flexometer | | | | | |

| bleibende Verformung | (%) | 2,9 | 3,1 | 3,1 | 2,7 |
| Temperaturanstieg | (°C) | 20 | 19 | 27 | 26 |

Die Ergebnisse zeigen deutlich die vorteilhaften Eigenschaften der unter Mitverwendung der Copolymerisate hergestellten Kautschuk-Mischungen. So ist aus den Beispielen 1 und 2 die rasche Bildung des Fells ersichtlich, die eine zeit- und energiesparende Herstellung der Mischung ermöglicht. Beispiele 4 bis 6 demonstrieren anhand der geringeren Werte für die Mooney-Plastizität der Mischungen die bessere Verarbeitbarkeit und lassen deutlich die günstigeren mechanischen Eigenschaften hinsichtlich Reißfestigkeit und insbesondere Reißdehnung gegenüber dem Vergleich 3 erkennen. Außerdem tritt eine Verbesserung der Winkelkerbzähigkeit ein. Bei füllstoffhaltigen Mischungen wird bei Einsatz der Copolymerisate nur etwa die Hälfte der Arbeitszeit für die Bildung eines Felles auf der Mischwalze benötigt. Dadurch erhöht sich die Produktion der aus den Mischungen hergestellten Gummiwaren.

Bei den Ergebnissen der Beispiele 7 und 8, die unter Einsatz füllstoffhaltiger Mischungen erhalten wurden, zeigen sich hinsichtlich Temperaturanstieg und bleibender Verformung bei der dynamischen Krafteinwirkung im Goodrich-Flexometer sowie beim Druckverformungsrest keine nennenswerten Veränderungen der Werte gegenüber den Vergleichen 4 und 5. Diese Eigenschaften der erfindungsgemäßen Beispiele sind überraschend, da infolge des Zusatzes des thermoplastischen Copolymerisats starke Verformungen und ein deutlicher Temperaturanstieg zu erwarten gewesen wären. Es ist auch eine deutliche Herabsetzung der Rückprallelastizität festzustellen, die auf erhöhte Dämpfungseigenschaften hindeutet. Bei Einsatz des Copolymerisats in der Kautschuk-Mischung werden außerdem die gleichen Vulkanisathärten erhalten wie in den Formulierungen der Vergleichsmischungen, während bekannterweise der Zusatz von Organischen Komponenten z. B. Plastifizierungsmitteln wie Mineralölen zu einer Reduzierung der Härte führt.

**Patentansprüche** für die Vertragsstaaten: BE, CH, DE, FR, GB, IT, LI, NL, SE

1. Kautschuk-Mischungen mit guter Verarbeitbarkeit und guten mechanischen Eigenschaften auf Basis von synthetischen und/oder natürlichen Kautschuk-Arten unter Mitverwendung von üblichen Zusätzen, dadurch gekennzeichnet, daß die Mischung ein Copolymerisat mit einer Schmelzviskosität von höchstens 150 Pa·s, gemessen bei 180°C, aus
a) 40 bis 95 Gew.-% mindestens eines Alkylesters von $\alpha,\beta$-äthylenisch ungesättigten Mono- und/oder Dicarbonsäuren, der im Alkoholrest 1 bis 12 C-Atome enthält,
b) 0,5 bis 15 Gew.-% mindestens eines Amids $\alpha,\beta$-äthylenisch ungesättigter Mono- und/oder Dicarbonsäuren,
c) 0,2 bis 10 Gew.-% mindestens einer $\alpha,\beta$-äthylenisch ungesättigten Mono- und/oder Dicarbonsäure und
d) 0 bis 50, vorzugsweise 0 bis 30 Gew.-% mindestens einer anderen $\alpha,\beta$-äthylenisch ungesättigten copolymerisierbaren Verbindung,
enthält, wobei die Summe der Prozentangaben aus a) bis d) jeweils 100 beträgt, und die Kautschuk-Mischungen das Copolymerisat in einer Menge von 0,5 bis 150 Gew.-%, bezogen auf die Menge an eingesetztem Kautschuk, enthalten.
2. Kautschuk-Mischungen nach Anspruch 1, dadurch gekennzeichnet, daß die Gesamtmenge der Komponenten b) und c) zwischen 5 und 15 Gew.-% beträgt.
3. Kautschuk-Mischungen nach Anspruch 1 oder 2, dadurch gekennzeichnet, daß das Copolymerisat aus
a) 55 bis 65 Gew.-% 2-Äthylhexylacrylat, 15 bis 30 Gew.-% Butylacrylat und 3 bis 15 Gew.-% Methylmethacrylat,
b) 2 bis 10 Gew.-% Acrylamid und
c) 0,3 bis 5 Gew.-% Acrylsäure
besteht, wobei die Summe von b) und c) vorzugsweise mindestens 5 Gew.-% beträgt.
4. Kautschuk-Mischungen nach einem oder mehreren der Ansprüche 1 bis 3, dadurch gekennzeichnet, daß 1 bis 100 Gew.-%, vorzugsweise 1,5 bis 50 Gew.-%, des Copolymerisats, bezogen auf die Menge an eingesetztem Kautschuk, verwendet werden.
5. Kautschuk-Mischungen nach einem oder mehreren der Ansprüche 1 bis 4, dadurch gekennzeichnet, daß die Carbonsäureeinheiten der Komponenten a) bis c) von Säuren mit 3 bis 5 C-Atomen abgeleitet sind.
6. Kautschuk-Mischungen nach einem oder mehreren der Ansprüche 1 bis 5, dadurch gekennzeichnet, daß die Schmelzviskosität des Copolymerisats höchstens 100 Pa·s, vorzugsweise höchstens 70 Pa·s, beträgt.
7. Gummiartikel und Kraftfahrzeugreifen, hergestellt durch Vulkanisation von Kautschuk-Mischungen nach einem oder mehreren der Ansprüche 1 bis 6.

**Patentansprüche** für den Vertragsstaat: AT

1. Verfahren zur Herstellung von Kautschuk-Mischungen mit guter Verarbeitbarkeit und guten mechanischen Eigenschaften auf Basis von synthetischen und/oder natürlichen Kautschuk-Arten unter Mitverwendung von üblichen Zusätzen, dadurch gekennzeichnet, daß in die Mischung ein Copolymerisat mit einer Schmelzviskosität von höchstens 150 Pa·s, gemessen bei 180°C, aus

a) 40 bis 95 Gew.-% mindestens eines Alkylesters von α,β-äthylenisch ungesättigten Mono- und/oder Dicarbonsäuren, der im Alkoholrest 1 bis 12 C-Atome enthält,

b) 0,5 bis 15 Gew.-% mindestens eines Amids α,β-äthylenisch ungesättigter Mono- und/oder Dicarbonsäuren,

c) 0,2 bis 10 Gew.-% mindestens einer α,β-äthylenisch ungesättigten Mono- und/oder Dicarbonsäure und

d) 0 bis 50 Gew.-%, vorzugsweise 0 bis 30 Gew.-%, mindestens einer anderen α,β-äthylenisch ungesättigten copolymerisierbaren monomeren Verbindung,

wobei die Summe der Prozentangaben aus a) bis d) jeweils 100 beträgt, in einer Menge von 0,5 bis 150 Gew.-%, bezogen auf die Menge an eingesetztem Kautschuk, eingearbeitet wird.

2. Verfahren nach Anspruch 1, dadurch gekennzeichnet daß die Gesamtmenge der Komponenten b) und c) zwischen 5 und 15 Gew.-% beträgt.

3. Verfahren nach Anspruch 1 oder 2, dadurch gekennzeichnet, daß ein Copolymerisat aus

a) 55 bis 65 Gew.-% 2-Äthylhexylacrylat, 15 bis 30 Gew.-% Butylacrylat und 3 bis 15 Gew.-% Methylmethacrylat,

b) 2 bis 10 Gew.-% Acrylamid und

c) 0,3 bis 5 Gew.-% Acrylsäure eingearbeitet wird, wobei die Summe von b) und c) vorzugsweise mindestens 5 Gew.-% beträgt.

4. Verfahren nach einem oder mehreren der Ansprüche 1 bis 3, dadurch gekennzeichnet, daß 1 bis 100 Gew.-%, vorzugsweise 1,5 bis 50 Gew.-%, des Copolymerisats, bezogen auf die Menge an eingesetztem Kautschuk, verwendet werden.

5. Verfahren nach einem oder mehreren der Ansprüche 1 bis 4, dadurch gekennzeichnet, daß ein Copolymerisat verwendet wird, dessen Carbonsäureeinheiten der Komponenten a) bis c) von Säuren mit 3 bis 5 C-Atomen abgeleitet sind.

6. Verfahren nach einem oder mehreren der Ansprüche 1 bis 5, dadurch gekennzeichnet, daß die Schmelzviskosität des Copolymerisats höchstens 100 Pa·s, vorzugsweise höchstens 70 Pa·s, beträgt.

7. Gummiartikel und Kraftfahrzeugreifen, die durch Vulkanisation von Kautschuk-Mischungen, die nach dem Verfahren eines oder mehrerer der Ansprüche 1 bis 6 erhalten worden sind, hergestellt sind.

**Claims** for the Contracting States: BE, CH, DE, FR, GB, IT, LI, NL, SE

1. A rubber mixture which can be easily processed and has good mechanical properties and is based on a synthetic and/or natural grade of rubber, the customary additives also being used, which contains a copolymer with a melt viscosity of not more than 150 Pa·s., measured at 180°C, of

a) 40 to 95 % by weight of at least one alkyl ester of α,β-ethylenically unsaturated mono- and/or dicarboxylic acids which contains 1 to 12 carbon atoms in the alcohol radical,

b) 0.5 to 15 % by weight of at least one amide of α,β-ethylenically unsaturated mono- and/or dicarboxylic acids,

c) 0.2 to 10 % by weight of at least one α,β-ethylenically unsaturated mono- and/or dicarboxylic acid and

d) 0 to 50, preferably 0 to 30 % by weight, of at least one other α,β-ethylenically unsaturated copolymerizable compound,

the sum of the percentages of a) to d) in each case being 100, and the rubber mixtures containing the copolymer in an amount of 0.5 to 150 % by weight, based on the amount of rubber employed.

2. A rubber mixture as claimed in claim 1, wherein the total amount of components b) and c) is between 5 and 15 % by weight.

3. A rubber mixture as claimed in claim 1 or 2, wherein the copolymer comprises

a) 55 to 65 % by weight of 2-ethylhexyl acrylate, 15 to 30 % by weight of butyl acrylate and 3 to 15 % by weight of methyl methacrylate,

b) 2 to 10 % by weight of acrylamide and

c) 0.3 to 5 % by weight of acrylic acid,

the sum of b) and c) preferably being at least 5 % by weight.

4. A rubber mixture as claimed in any one of claims 1 to 3, wherein 1 to 100 % by weight, preferably 1.5 to 50 % by weight, of the copolymer is used, based on the amount of rubber employed.

5. A rubber mixture as claimed in any one of claims 1 to 4, wherein the carboxylic acid units of components a) to c) are derived from acids having 3 to 5 carbon atoms.

6. A rubber mixture as claimed in any one of claims 1 to 5, wherein the melt viscosity of the copolymer is not more than 100 Pa·s., preferably not more than 70 Pa·s.

7. A rubber article or motor vehicle tire produced by vulcanization of a rubber mixture as claimed in any one of claims 1 to 6.

**Claims** for the Contracting State: AT

1. A process for the preparation of a rubber mixture which can be easily processed and has good mechanical properties and is based on a synthetic and/or natural grade of rubber, the customary additives also being used, which comprises incorporating into the mixture a copolymer with a melt viscosity of not more than 150 Pa·s., measured at 180°C or, of

a) 40 to 95 % by weight of at least one alkyl ester of α,β-ethylenically unsaturated mono- and/or dicarboxylic acids which contains 1 to 12 carbon atoms in the alcohol radical,

b) 0.5 to 15 % by weight of at least one amide of α,β-ethylenically unsaturated mono- and/or dicarboxylic acids,

c) 0.2 to 10 % by weight of at least one α,β-ethylenically unsaturated mono- and/or dicarboxylic acid and

d) 0 to 50 % by weight, preferably 0 to 30 % by weight, of at least one other α,β-ethylenically unsaturated copolymerizable compound,

the sum of the percentages of a) to d) in each case being 100, and the rubber mixtures containing the copolymer in an amount of 0.5 to 150 % by weight, based on the amount of rubber employed.

2. The process as claimed in claim 1, wherein the total amount of components b) and c) is between 5 and 15 % by weight.

3. The process as claimed in claim 1 or 2, where in a copolymer comprising

a) 55 to 65 % by weight of 2-ethylhexyl acrylate, 15 to 30 % by weight of butyl acrylate and 3 to 15 % by weight of methyl methacrylate,

b) 2 to 10 % by weight of acrylamide and

c) 0.3 to 5 % by weight of acrylic acid,

the sum of b) and c) preferably being at least 5 % by weight is incorporated.

4. The process as claimed in any one of claims 1 to 3, wherein 1 to 100 % by weight, preferably 1.5 to 50 % by weight, of the copolymer is used, based on the amount of rubber employed.

5. The process as claimed in any one of claims 1 to 4, where in a copolymer whose carboxylic acid units of components a) to c) are derived from acids having 3 to 5 carbon atoms is used.

6. The process as claimed in any one of claims 1 to 5, wherein the melt viscosity of the copolymer is not more than 100 Pa·s., preferably not more than 70 Pa·s.

7. A rubber article or motor vehicle tire produced by vulcanization of a rubber mixture obtained by the process as claimed in any one of claims 1 to 6.

**Revendications** pour les Etats Contractants: BE, CH, DE, FR, GB, IT, LI, NL, SE

1. Mélanges de caoutchouc ayant une meilleure aptitude à la mise en oeuvre et ayant de bonnes propriétés mécaniques, à base de genres de caoutchouc synthétique et/ou naturel, avec co-utilisation d'additifs usuels, caractérisés en ce que le mélange contient un copolymère (ayant en masse fondue une viscosité d'au maximum 150 Pa·s, quand elle est mesurée à 180°C) de:

a) 40 à 95 % en poids d'au moins un ester alkylique d'acide monocarboxylique et/ou dicarboxylique à insaturation éthylénique en alpha-bêta, contenant dans le reste alcool 1 à 12 atomes de carbone,

b) 0,5 à 15 % en poids d'au moins un amide d'acide monocarboxylique et/ou dicarboxylique à insaturation éthylénique en alpha-bêta,

c) 0,2 à 10 % en poids d'au moins un acide monocarboxylique et/ou dicarboxylique à insaturation éthylénique en alpha-bêta, et

d) 0 à 50, avantageusement 0 à 30, % en poids d'au moins un autre composé copolymérisable, présentant de l'insaturation éthylénique en alpha-bêta,

la somme des pourcentages en a) à d) formant chaque fois 100, et les mélanges de caoutchouc contenant le copolymère en une proportion de 0,5 à 150 % en poids, sur la base de la quantité du caoutchouc utilisé.

2. Mélanges de caoutchouc selon la revendication 1, caractérisés en ce que la quantité totale des composants b) et c) se situe entre 5 et 15 % en poids.

3. Mélanges de caoutchouc selon la revendication 1 ou 2, caractérisés en ce que le copolymère consiste en

a) 55 à 65 % en poids d'acrylate d'éthyl-2 hexyle, 15 à 30 % en poids d'acrylate de butyle et 3 à 15 % en poids de méthacrylate de méthyle,

b) 2 à 10 % en poids d'acrylamide, et

c) 0,3 à 5 en poids d'acide acrylique,

la somme de b) et de c) valant avantageusement au moins 5 % en poids.

4. Mélanges de caoutchouc selon une ou plusieurs des revendications à 3, caractérisés en ce qu'on utilise 1 à 100 % en poids, avantageusement 1,5 à 50 % en poids, du copolymère, sur la base de la quantité de caoutchouc mis en oeuvre.

5. Mélanges de caoutchouc selon une ou plusieurs des revendications 1 à 4, caractérisés en ce que les motifs acide carboxylique des composants a) à c) dérivent d'acides comportant 3 à 5 atomes de carbone.

6. Mélanges de caoutchouc selon une ou plusieurs des revendications 1 à 5, caractérisés en ce que la viscosité en masse fondue du copolymère vaut au maximum 100 Pa·s, avantageusement 70 Pa·s au maximum.

7. Articles en gomme et pneumatiques pour véhicules, produits par vulcanisation de mélanges de caoutchouc selon une ou plusieurs des revendications 1 à 6.

**Revendications** pour l'Etat Contractant: AT

1. Procédé pour préparer des mélanges de caoutchouc ayant une bonne aptitude à la mise en oeuvre et de bonnes propriétés mécaniques, à base de genres de caoutchouc synthétique et/ou naturel, avec co-utilisation d'additifs usuels, procédé caractérisé en ce qu'on incorpore au mélange un copolymère (ayant une viscosité en masse fondue de 150 Pa·s au maximum, mesurée à 180°C) de

a) 40 à 95 en poids d'au moins un ester alkylique d'acide mono- et/ou dicarboxylique à insaturation éthylénique en alpha-bêta, comportant de 1 à 12 atomes de carbone dans le reste alcool,

b) 0,5 à 15 % en poids d'au moins un amide d'acide monocarboxylique et/ou dicarboxylique à insaturation éthylénique en alpha-bêta,

c) 0,2 à 10 % en poids d'au moins un acide monocarboxylique et/ou dicarboxylique à insaturation éthylénique en alpha-bêta, et

d) 0 à 50 % en poids, avantageusement 0 à 30 % en poids, d'au moins un autre monomère copolymérisable, à insaturation éthylénique en alpha-bêta,

la somme des pourcentages de a) à d) formant à chaque fois 100, en une quantité de 0,5 à 150 % en poids, sur la base de la quantité du caoutchouc mis en oeuvre.

2. Procédé selon la revendication 1, caractérisé en ce que la quantité totale des composants b) et c) se situe entre 5 et 15 % en poids.

3. Procédé selon la revendication 1 ou 2, caractérisé en ce qu'on incorpore un copolymère de:

a) 55 à 65 % en poids d'acrylate d'éthyl-2 hexyle, 15 à 30 % en poids d'acrylate de butyle et 3 à 15 % en poids de méthacrylate de méthyle,

b) 2 à 10 % en poids d'acrylamide, et

c) 0,3 à 5 % en poids d'acide acrylique,

la somme de b) et c) valant avantageusement au moins 5 % en poids.

4. Procédé selon une ou plusieurs des revendications 1 à 3, caractérisé en ce qu'on utilise 1 à 100 % en poids, avantageusement 1,5 à 50 % en poids, du copolymère, sur la base de la quantité de caoutchouc mis en oeuvre.

5. Procédé selon une ou plusieurs des revendications 1 à 4, caractérisé en ce qu'on utilise un copolymère dont les motifs acides carboxyliques des composants a) à c) dérivent d'acides comportant 3 à 5 atomes de carbone.

6. Procédé selon une ou plusieurs des revendications 1 à 5, caractérisé en ce que la viscosité en masse fondue du copolymère est au maximum de 100 Pa·s, avantageusement de 70 Pa·s au maximum.

7. Articles en caoutchouc et pneumatique pour véhicules, qui ont été produits par vulcanisation de mélanges de caoutchouc, obtenus selon le procédé selon une ou plusieurs des revendications 1 à 6.